(19) Europäisches Patentamt
European Patent Office
Office européen des brevets

(11) Veröffentlichungsnummer: **0 049 381**
**B1**

(12) **EUROPÄISCHE PATENTSCHRIFT**

(45) Veröffentlichungstag der Patentschrift: **04.01.84**

(51) Int. Cl.$^3$: **C 09 B 1/48,** C 09 B 5/28, C 07 C 97/24

(21) Anmeldenummer: **81107219.8**

(22) Anmeldetag: **14.09.81**

(54) **Verfahren zur Herstellung von Dianthrachinonylaminen.**

(30) Priorität: **26.09.80 DE 3036374**

(43) Veröffentlichungstag der Anmeldung: **14.04.82 Patentblatt 82/15**

(45) Bekanntmachung des Hinweises auf die Patenterteilung: **04.01.84 Patentblatt 84/1**

(84) Benannte Vertragsstaaten: **CH DE FR GB IT LI**

(56) Entgegenhaltungen:
**DE - C - 201 327**

**CHEMICAL ABSTRACTS, Band 77, Nr. 18, 30. Oktober 1978, Seite 89, Zusammenfassung 116043k, COLUMBUS, OHIO (US)**

(73) Patentinhaber: **BAYER AG, Zentralbereich Patente, Marken und Lizenzen, D-5090 Leverkusen 1, Bayerwerk (DE)**

(72) Erfinder: **Reubke, Karl-Julius, Dr., Rybnikerstrasse 10, D-5000 Koeln 80 (DE)**
Erfinder: **Stawitz, Josef, Dr., Gerstenkamp 21, D-5000 Koeln 80 (DE)**

**EP 0 049 381 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Dianthrachinonylaminen

Die Erfindung betrifft ein Verfahren zur Herstellung von Dianthrachinonylaminen durch Umsetzung von Nitroanthrachinonen mit Aminoanthrachinonen in Gegenwart von basischen Erdalkalimetallverbindungen.

Dianthrachinonylamine wurden üblicherweise durch Umsetzung von Halogenanthrachinonen mit Aminoanthrachinonen unter Kupferkatalyse nach der Ullmann-Reaktion hergestellt (Ullmanns Enzyklopädie der technischen Chemie, Bd. 7, S. 585, 3. Aufl., (1974«. Die benötigten Chloranthrachinone werden aus den Sulfosäuren hergestellt. Beim Übergang auf die Anthrachinonnitrierung wäre ein Verfahren erwünscht, welches es gestattet, die als Zwischenprodukte für Küpenfarbstoffe wichtigen Dianthrachinonylamine direkt aus den Nitroanthrachinonen ohne den Umweg über die Chlorderivate herzustellen.

Es ist bekannt, dass sich Nitroanthrachinone in ähnlicher Weise wie Chloranthrachinone unter Kupferkatalyse mit Aminoanthrachinonen zu Anthrachinonylaminen kondensieren lassen (J. Soc. Chem. Ind. Jap. 43, 386 B (1940); Ind. J. Chem. 14B, 171 (1976«), wobei jedoch die Aubeuten wesentlich geringer sind als beim Einsatz der Chloranthrachinone. Die wesentlich geringere Reaktionsbereitschaft der Nitroanthrachinone bei der Umsetzung mit Aminoanthrachinonen unter Kupferkatalyse geht unter anderem daraus hervor, dass sich Anthrachinonverbindungen, die sowohl Nitro- wie auch Halogensubstituenten tragen nach diesem Verfahren zu den nitrogruppensubstituierten Dianthrachinonylaminen umsetzen lassen (siehe die Herstellung von 5-Nitro-1,1'-dianthrachinonylamin in CS-PS 143 035). Nach einer älteren Patentschrift (DE-PS 201 327) gelingt die Darstellung von Dianthrachinonylaminen aus Nitro- und Aminoanthrachinonen auch mit Alkalicarbonaten in Nitrobenzol ohne Kupferkatalyse; die Ausbeuten und Qualitäten der so erhaltenen Produkte sind für eine technische Nutzung jedoch nicht ausreichend.

Das neue Verfahren zur Herstellung von Dianthrachinonylaminen ist dadurch gekennzeichnet, dass man ein gegebenenfalls substituiertes Nitroanthrachinon mit einem gegebenenfalls substituierten Aminoanthrachinon in Anwesenheit einer basisch reagierenden Erdalkalimetallverbindung bei Temperaturen zwischen 190 °C und 260 °C umsetzt. Vorzugsweise wird die Umsetzung in Gegenwart eines Lösungs- oder Verdünnungsmittels durchgeführt. Weiterhin arbeitet man vorzugsweise in Abwesenheit von Kupfer oder Kupferverbindungen.

Vorzugsweise werden in das erfindungsgemässe Verfahren Nitroanthrachinone der Formel

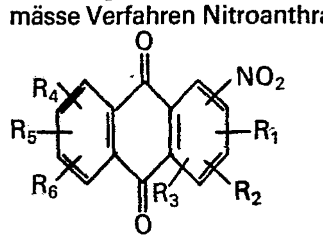

(I)

in der

$R_1$,$R_2$,$R_3$, $R_4$ und $R_5$ Wasserstoff, Halogen, Arylamino oder Acylamino und

$R_6$ Wasserstoff, Nitro, Halogen, Arylamino oder Acylamino bezeichnen und Aminoanthrachinone der Formel

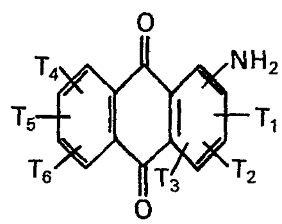

(II)

in der

$T_1$,$T_2$,$T_3$,$T_4$,$T_5$, und $T_6$ Wasserstoff, Amino, Halogen, Arylamino oder Acylamino bezeichnen, eingesetzt.

Halogen steht bevorzugt für Chlor, Brom oder Fluor, Arylamino steht bevorzugt für Phenylamino, Naphthylamino und Anthrachinonylamino, wobei diese Reste beispielsweise durch Trifluormethyl, $C_1$–$C_6$-Alkyl, $C_1$–$C_6$-Alkoxy, Nitro, Chlor, Brom und Fluor substituiert sein können. Acylamino steht bevorzugt für $C_1$–$C_6$-Alkylcarbonylamino oder Benzoylamino, das beispielsweise durch Trifluormethyl, $C_1$–$C_6$-Alkyl, $C_1$–$C_6$-Alkoxy, Nitro, Chlor, Brom und Fluor substituiert sein kann.

Bevorzugt werden unsubstituierte Nitro- oder unsubstituierte Aminoanthrachinone sowie Nitro- oder Aminoanthrachinone, die einen Substituenten tragen, in das neue Verfahren eingesetzt.

Besonders bevorzugt werden in das erfindungsgemässe Verfahren Nitroanthrachinone der Formel

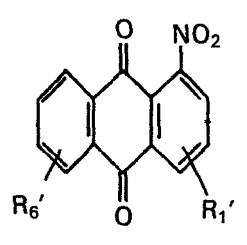

(III)

in der

$R_1'$ Wasserstoff oder Acylamino und

$R_6'$ Wasserstoff, Nitro oder Acylamino bezeichnen,

eingesetzt, wobei Acylamino vorzugsweise für Benzoylamino steht. Beispielsweise seien genannt: 1-Nitro-, 1,5-Dinitro-, 1,8-Dinitro-, 1,7-Dinitro-, 1,6-Dinitroanthrachinon sowie 1-Nitro-4-, 1-Nitro-5- und 1-Nitro-8-acylaminoanthrachinon.

Weiterhin werden in das erfindungsgemässe Verfahren vorzugsweise Aminoanthrachinone der Formel

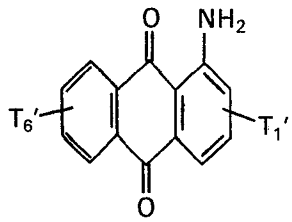

(IV)

in der

$T_1'$ und $T_6'$ Wasserstoff, Amino oder Acylamino insbesondere Benzoylamino bezeichnen, eingesetzt.

Beispielsweise seien genannt: 1-Amino-, 1,4-Diamino-, 1,5-Diamino-, 1,8-Diaminoanthrachinon, 1-Amino-4-benzoylamino-, 1-Amino-5-benzoylamino-, 1-Amino-8-benzoylaminoanthrachinon.

Das Molverhältnis von gegebenenfalls substituiertem Nitroanthrachinon zu gegebenenfalls substituiertem Aminoanthrachinon kann in weiten Grenzen variiert werden; vorzugsweise erfolgt die Umsetzung im Molverhältnis 0,8:1 bis 1,5:1.

Als alkalisch reagierende Verbindungen der Erdalkalimetalle kommen für das neue Verfahren die Oxide und Hydroxide sowie die basischen Salze zur Anwendung. Bevorzugt werden die Oxide, Hydroxide und Carbonate wie beispielsweise MgO, $Ca(OH)_2$, $CaCO_3$ eingesetzt; bevorzugte Verwendung findet CaO.

Die in das Verfahren eingesetzte Menge der alkalisch reagierenden Erdalkalimetallverbindung ist in weiten Grenzen variabel. Bevorzugt werden Mengen von etwa 0,5 bis etwa 20 Mol, besonders bevorzugt Mengen von etwa 1 Mol bis etwa 10 Mol, pro Mol des gegebenenfalls substituierten Nitroanthrachinons eingesetzt.

Die erfindungsgemässe Reaktion kann beispielsweise in Rührwerksbehältern bei Normaldruck oder, bei Verwendung eines Lösungsmittels mit einem Siedepunkt unterhalb der gewählten Reaktionstemperatur, unter einem Überdruck bis zu 30 bar durchgeführt werden. Vorteilhaft kann die Reaktion auch in einem Schaufeltrockner oder in einer anderen gut mischenden und beheizbaren Apparatur durchgeführt werden. Auch eine kontinuierliche Arbeitsweise, bei der man eine innige Mischung aus den Reaktionskomponenten in Gegenwart fester oder flüssiger Verdünnungsmittel kontinuierlich durch eine auf Reaktionstemperatur gehaltene Zone führt, ist durchführbar.

Besonders bevorzugt liegt die Reaktionstemperatur zwischen 200 und 230 °C. Die Reaktionszeit richtet sich nach der gewählten Reaktionstemperatur und nach der Reaktivität der eingesetzten Nitroverbindung und l iegt zwischen 1 und 30 Stunden. Bevorzugt werden Reaktionszeiten von 3 bis 20 Stunden und die Temperatur wird in dem angegebenen Intervall entsprechend gewählt.

Die Einsatzmaterialien können bei 20° bis 200 °C zusammengegeben und anschliessend auf Reaktionstemperatur geheizt werden, oder aber es werden das gegebenenfalls substituierte Aminoanthrachinon und die alkalisch reagierende Verbindung gegebenenfalls im Lösungs- oder Verdünnungsmittel auf die Reaktionstemperatur gebracht und das gegebenenfalls substituierte Nitroanthrachinon kontinuierlich oder portionsweise zudosiert.

Die Zugabe erfolgt innerhalb 0,5 bis 3 Stunden. Anschliessend wird der Ansatz weiter bei der Reaktionstemperatur gerührt, bis z.B. dünnschichtchromatographisch oder IR-spektroskopisch die Ausgangskomponenten nicht mehr oder in nicht grösserem Masse als im Standard nachgewiesen werden können.

Als Lösungs- oder Verdünnungsmittel für das erfindungsgemässe Verfahren kommen insbesondere solche in Frage, die unter den Reaktionsbedingungen weitgehend inert sind. Insbesondere werden solche Lösungsmittel eingesetzt, welche die organischen Reaktionspartner in hinreichender Menge lösen. Bevorzugte Lösungs- und Verdünnungsmittel sind aromatische, hydroaromatische oder heteroaromatische Kohlenwasserstoffe, die beispielsweise durch Halogen, Nitro oder niedere Alkylgruppen substituiert sein können sowie Diarylether und Sulfone.

Geeignete aromatische und hydroaromatische Kohlenwasserstoffe sind beispielsweise: Toluol, o-, m-, p-Xylol, Isopropylbenzol, Trimethylbenzol, Benzol, Diethylbenzol, Tetramethylbenzol, Di-isopropylbenzol, Isododecylbenzol, Tetralin, Dekalin, Naphthalin, Methylnaphthalin, Diphenyl, Diphenylmethan, o-, m-, p-Cymol, Dibenzyl, Dihydronaphthalin, 2,2'-Dimethyldiphenyl, 2,3-Dimethyldiphenyl, 2,4'-Dimethyldiphenyl, 3,3'-Dimethyldiphenyl, 1,2-Dimethyl-naphthalin, 1,4-Dimethylnaphthalin, 1,6-Dimethylnaphthalin, 1,7-Dimethylnaphthalin, 1,1-Diphenylethan, Hexamethylbenzol, Isoamylbenzol, Pentamethylbenzol, 1,2,3,4-Tetramethylbenzol, 1,2,3,5-Tetramethylbenzol, 1,2,7-Trimethylnaphthalin, 1,2,5-Trimethylnaphthalin, Chlorbenzol, o-Dichlorbenzol, Trichlorbenzol, Chlortoluol und Nitrobenzol und Diphenylether.

Geeignete heteroaromatische Kohlenwasserstoffe sind aromatische Stickstoffbasen wie beispielsweise Pyridin, Methylpyridin, Dimethyl- und Trimethylpyridin, Chinolin, Methylchinolin.

Bevorzugt werden die hochsiedenden Lösungsmittel wie beispielsweise Naphthalin, Chlornaphthalin und Chinolin eingesetzt.

Das Lösungsmittel wird vorzugsweise in einer Menge von 0,5 bis 10 Gew.-Teile bezogen auf eingesetztes gegebenenfalls substituiertes Aminoanthrachinon verwendet. Die Menge richtet sich nach der gewählten Verfahrensweise, z.B. werden bei der Durchführung in einem Schaufeltrockner nach Art einer Backschmelze nur Mengen von 0,5 bis 5 Gew.-Teilen benötigt.

Die Aufarbeitung erfolgt nach an sich bekannten Verfahren, beispielsweise durch Abdestillieren des Lösungsmittels gegebenenfalls unter vermindertem Druck oder durch Filtration gegebenenfalls nach Verdünnen mit einem geeigneten Lösungsmittel. Zum Verdünnen kommen solche Lösungsmittel in Betracht, die sich mit dem für die Reaktion verwendeten Lösungsmittel mischen

und im allgemeinen einen niedrigeren Siedepunkt besitzen. Besonders seien die Alkohole mit 1 bis 5 C-Atomen, Kohlenwasserstoffe mit 5–10 C-Atomen, sowie halogenierte Kohlenwasserstoffe genannt. Das Verdünnungsmittel wird so gewählt, dass es leicht durch fraktionierte Destillation wiedergewonnen werden kann. Eine bevorzugte Ausführungsform des erfindungsgemässen Verfahrens sei im folgenden anhand der Darstellung von 1,1'-Dianthrachinonylamin beschrieben.

In 40 bis 200 Gew.-Teile Naphthalin oder Chlornaphthalin werden bei 20 bis 150 °C 10 Gew.-Teile 1-Aminoanthrachinon und 5–15 Gew.-Teile CAO eingetragen. Nach dem Erhitzen auf 190 bis 210 °C werden in kleinen Portionen innerhalb von 0,5 bis 3 Stunden 12 bis 14 Gew.-Teile 1-Nitroanthrachinon eingetragen. Dann lässt man 2 bis 10 Stunden bei 200 bis 230 °C nachrühren. Nach Reaktionsende, das beispielsweise dünnschichtchromatographisch bestimmt werden kann, wird mit einem geeigneten Lösungsmittel, beispielsweise Toluol bei 100 bis 150 °C verdünnt. Die zugesetzte Toluolmenge ist in weiten Grenzen variabel und beträgt beispielsweise 0,5 bis 10 Teile bezogen auf das eingesetzte Naphthalin oder Chlornaphthalin. Nach dem Verdünnen des Ansatzes wird entweder noch warm oder nach dem Erkalten abgesaugt und das Produkt durch Trocknung vom anhaftenden organischen Lösungsmittel befreit.

Anschliessend wird der Nutschkuchen in Wasser angeschlagen und nach Zusatz von 1 bis 3 Mol Ammoniumchlorid bezogen auf eingesetztes Calciumoxid wird zum Rückfluss erhitzt. Es wird dann solange unter Rückfluss gekocht, bis kein Nitrit mehr nachweisbar ist. Gegebenenfalls lässt man dabei zur Beschleunigung der Reaktion 5 bis 10%ige Salzsäure zulaufen, oder gibt konzentrierte Salzsäure so durch den Kühler, dass sie mit dem Destillat verdünnt wird und vermeidet auf diese Weise die Bildung nitroser Gase.

Das erfindungsgemässe Verfahren ermöglicht die Herstellung von Dianthrachinonylaminen ohne den Umweg über die Chlorantrachinone und bietet weitere überraschende Vorteile. So werden die Dianthrachinonylamine in guten Ausbeuten erhalten. Ferner ermöglicht es die Herstellung von chlorsubstituierten Dianthrachinonylaminen, da bei gleichzeitiger Anwesenheit von Chlor- und Nitrosubstituenten im Anthrachinonmolekül die Nitrogruppe selektiv reagiert.

Beispiel 1

In 40 g Naphthalin trägt man bei 130 °C 10 g 1-Amino-anthrachinon (98%ig) und 10 g feingepulvertes Calciumoxid ein. Nach Aufheizen auf 200 °C werden innerhalb von 3 Stunden 13 g 1-Nitroanthrachinon (98%ig) in kleinen Portionen zugegeben. Man lässt noch 4 Stunden bei 200 °C nachrühren, kühlt die Schmelze auf 130 °C, verdünnt mit 80 ml Toluol und saugt bei 60 °C scharf ab. Das getrocknete, gemahlene Rohprodukt gibt man in eine Lösung von 10 g Ammoniumchlorid in 600 ml Wasser, erhitzt zum Rückfluss und säuert langsam mit 10%iger Salzsäure an. Dann wird heiss abgesaugt, mit Wasser gewaschen und bei 100 °C getrocknet. Ausbeute: 20,6 g 79%iges Dianthrachinonylamin, das entspricht 86,2% der Theorie.

Beispiel 2

In eine Mischung von 10 g 1-Aminoanthrachinon (98%ig) und 10 g Calciumoxid in 60 g Naphthalin werden bei 200 °C innerhalb von 2 Stunden 16 g 1-Chlor-5-nitro-anthrachinon (88 %ig) in kleinen Portionen eingetragen. Nach 6 Stunden bei 200 °C lässt man auf 130 °C abkühlen, verdünnt mit 100 ml Toluol und saugt bei 90 °C scharf ab. Den trockenen Nutschkuchen gibt man in eine Lösung von 10 g Ammoniumchlorid in 600 ml Wasser, erhitzt zum Rückfluss und säuert langsam mit 10 %iger Salzsäure an. Die Suspension wird heiss abgesaugt und mit Wasser gewaschen. Nach Trocknung bei 100 °C: 23,2 g Rohprodukt. Nach Ausrühren mit 90 °C heissem Toluol erhält man nach Trocknen bei 100 °C: 19,6 g 5-Chlor-1,1'-dianthrachinonylamin (81 %ig), das entspricht 77,9% der Theorie.

Beispiel 3

Eine Mischung von 10,3 g 1-Amino-5-benzoylaminoanthrachinon (90 %ig) und 10 g Calciumoxid in 80 ml 1-Chlornaphthalin wird auf 200 °C erhitzt. Innerhalb von 1 Stunde werden nun 12,4 g 5-Benzoylamino-1-nitroanthrachinon (90 %ig) eingetragen. Dann lässt man 6 Stunden bei 210 °C rühren. Nach Abkühlen auf 120 °C wird mit 80 ml Toluol verdünnt, abgesaugt, mit Toluol gewaschen und getrocknet. Den trokkenen Nutschkuchen trägt man in eine Lösung von 10 g Ammoniumchlorid in 500 ml Wasser ein, erhitzt zum Rückfluss und säuert langsam mit 10 %iger Salzsäure an. Nach Absaugen, Waschen und Trocknen erhält man 20,1 g 78,3 %iges 5,5'-Dibenzoylamino-1,1'-dianthrachinonylamin.

Beispiel 4

In einem 1 l Sulfierbecher mit Ankerrührer und Kurzwegdestillierbrücke werden 250 ml Chinolin, 100 g 1-Aminoanthrachinon und 25 g CaO auf 200–210 °C erwärmt. Innerhalb von 2 Stunden werden 120 g 1-Nitroanthrachinon portionsweise zugegeben und anschliessend wird noch 5 Stunden bei 200–210 °C gerührt. Man lässt auf 120 °C abkühlen und verdünnt langsam und unter Rückfluss mit 500 ml Ethanol. Anschliessend wird abgesaugt, mit Ethanol gewaschen und getrocknet. Der trockene Nutschkuchen wird in 1 l Wasser mit 100 g Ammoniumchlorid zum Rückfluss geheizt und langsam durch den Rückflusskühler mit konzentrierter Salzsäure sauer gestellt. Nach Absaugen, Neutralwaschen und Trocknen erhält man 190,4 g 80,4%iges 1,1'-Dianthrachinonylamin.

## Patentansprüche

1. Verfahren zur Herstellung von Dianthrachinonylaminen, dadurch gekennzeichnet, dass man ein gegebenenfalls substituiertes Nitroanthrachinon mit einem gegebenenfalls substituierten

Aminoanthrachinon in Anwesenheit einer basisch reagierenden Erdalkalimetallverbindung bei Temperaturen zwischen 190 °C und 260 °C umsetzt.

2. Verfahren gemäss Anspruch 1, dadurch gekennzeichnet, dass man in Gegenwart eines Lösungs- oder Verdünnungsmittels aus der Reihe aromatische, hydroaromatische oder heteroaromatische Kohlenwasserstoffe, die durch Halogen, Nitro oder niedere Alkylgruppen substituiert sein können und Sulfone, arbeitet.

3. Verfahren gemäss Anspruch 1, dadurch gekennzeichnet, dass man in Gegenwart von Chinolin, Naphthalin oder Chlornaphthalin arbeitet.

4. Verfahren gemäss den Ansprüchen 1 und 2, dadurch gekennzeichnet, dass man in Abwesenheit von Kupfer oder Kupferverbindungen arbeitet.

5. Verfahren gemäss den Ansprüchen 1 bis 3, dadurch gekennzeichnet, dass man Nitroanthrachinone der Formel

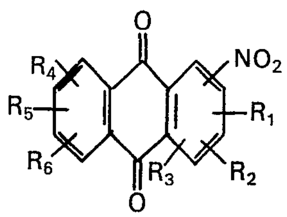

in der

$R_1$, $R_2$, $R_3$, $R_4$ und $R_5$ Wasserstoff, Halogen, Acylamino oder Arylamino und

$R_6$ Wasserstoff, Nitro, Halogen, Acylamino oder Arylamino bezeichnen, einsetzt.

6. Verfahren gemäss den Ansprüchen 1 bis 4, dadurch gekennzeichnet, dass man Aminoanthrachinone der Formel

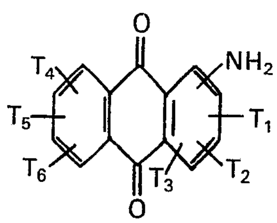

in der

$T_1$, $T_2$, $T_3$, $T_4$, $T_5$ und $T_6$ Wasserstoff, Amino, Halogen, Arylamino oder Acylamino bezeichnen, einsetzt.

7. Verfahren gemäss den Ansprüchen 1 bis 4 und 6, dadurch gekennzeichnet, dass man Nitroanthrachinone der Formel

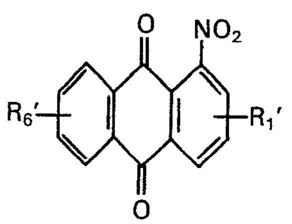

in der

$R_1'$ Wasserstoff oder Acylamino insbesondere Benzoylamino und

$R_6'$ Wasserstoff, Nitro oder Acylamino insbesondere Benzoylamino bezeichnen, einsetzt.

8. Verfahren gemäss den Ansprüchen 1 bis 5 und 7, dadurch gekennzeichnet, dass man Aminoanthrachinone der Formel

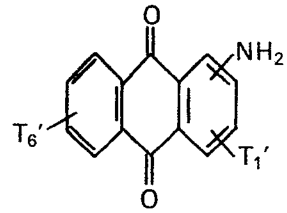

in der

$T_1'$ und $T_6'$ Wasserstoff, Amino oder Acylamino insbesondere Benzoylamino bezeichnen, einsetzt.

9. Verfahren gemäss den Ansprüchen 1 bis 8, dadurch gekennzeichnet, dass man in Anwesenheit von CaO arbeitet.

**Revendications**

1. Procédé de production de dianthraquinonylamines, caractérisé en ce qu'on fait réagir une nitro-anthraquinone éventuellement substituée avec une amino-anthraquinone éventuellement substituée en présence d'un composé de métal alcalino-terreux à réaction basique, à des températures comprises entre 190 et 260 °C.

2. Procédé suivant la revendication 1, caractérisé en ce qu'on opère en présence d'un solvant ou d'un diluant de la série des hydrocarbures aromatiques, hydro-aromatiques ou hétéro-aromatiques, qui peuvent être substitués par un halogène, des groupes nitro ou alkyle inférieurs, et de sulfones.

3. Procédé suivant la revendication 1, caractérisé en ce qu'on opère en présence de quinoléine, de naphthalène ou de chloronaphtalène.

4. Procédé suivant les revendications 1 et 2, caractérisé en ce qu'on opère en l'absence de cuivre ou de composés du cuivre.

5. Procédé suivant les revendications 1 à 3, caractérisé en ce qu'on utilise des nitro-anthraquinones de formule

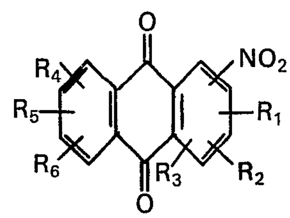

dans laquelle

$R_1$, $R_2$, $R_3$, $R_4$ et $R_5$ représentent l'hydrogène, un halogène, un groupe acyalmino ou arylamino et

$R_6$ représente l'hydrogène, le groupe nitro, un halogène, un groupe acyalmino ou arylamino

6. Procédé suivant les revendications 1 à 4, caractérisé en ce qu'on utilise des amino-anthraquinones de formule

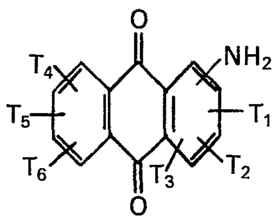

dans laquelle

$T_1$, $T_2$, $T_3$, $T_4$, $T_5$ et $T_6$ représentent l'hydrogène, un groupe amino, un halogène, un groupe arylamino ou acylamino.

7. Procédé suivant les revendications 1 à 4 et 6, caractérisé en ce qu'on utilise des nitro-anthraquinones de formule

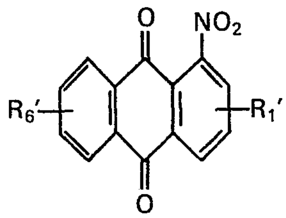

dans laquelle

$R_1'$ représente l'hydrogène ou un groupe acylamino, notamment benzoylamino et

$R_6'$ représente l'hydrogène, le groupe nitro ou un groupe acylamino, notamment benzoylamino.

8. Procédé suivant les revendications 1 à 5 et 7, caractérisé en ce qu'on utilise des aminoanthraquinones de formule

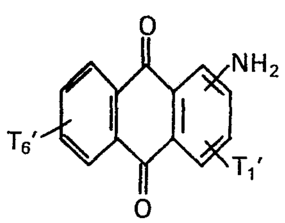

dans laquelle

$T_1'$ et $T_6'$ représentent l'hydrogène, le groupe amino ou un groupe acylamino, notamment benzoylamino.

9. Procédé suivant les revendications 1 à 8, caractérisé en ce qu'on opère en présence de CaO.

**Claims**

1. Process for the preparation of dianthraquinonylamines, characterised in that an optionally substituted nitroanthraquinone is reacted with an optionally substituted aminoanthraquinone in the presence of a basicreacting alkaline earth metal compound at temperatures between 190 °C and 260 °C.

2. Process according to Claim 1, characterised in that the reaction is carried out in the presence of a solvent or diluent from the series of aromatic, hydroaromatic or heteroaromatic hydrocarbons, which can be substituted by halogen, nitro or lower alkyl groups, and sulphones.

3. Process according to Claim 1, characterised in that the reaction is carried out in the presence of quinoline, naphthalene or chloronaphthalene.

4. Process according to Claims 1 and 2, characterised in that the reaction is carried out in the absence of copper or copper compounds.

5. Process according to Claims 1 to 3, characterised in that nitroanthraquinones of the formula

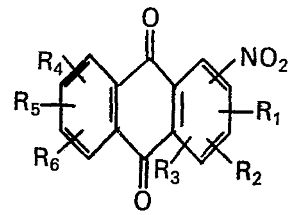

in which

$R_1$, $R_2$, $R_3$, $R_4$ and $R_5$ designate hydrogen, halogen, acylamino or arylamino, and

$R_6$ designates hydrogen, nitro, halogen, acylamino or arylamino, are employed.

6. Process according to Claims 1 to 4, characterised in that aminoanthraquinones of the formula

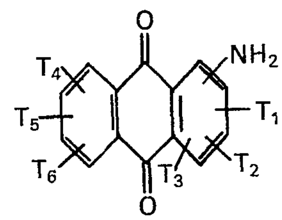

in which

$T_1$, $T_2$, $T_3$, $T_4$, $T_5$ and $T_6$ designate hydrogen, amino, halogen, arylamino or acylamino, are employed.

7. Process according to Claims 1 to 4 and 6, characterised in that nitroanthraquinones of the formula

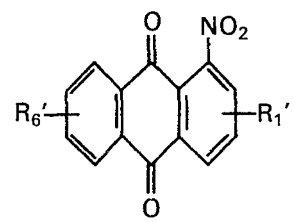

in which

$R_1'$ designates hydrogen or acylamino, in particular benzoylamino, and

$R_6'$ designates hydrogen, nitro or acylamino, in particular benzoylamino, are employed.

8. Process according to Claims 1 to 5 and 7, characterised in that aminoanthraquinones of the formula

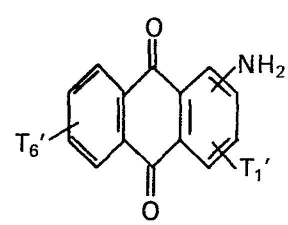

in which

$T_1'$ and $T_6'$ designate hydrogen, amino or acylamino, in particular benzoylamino, are employed.

9. Process according to Claims 1 to 8, characterised in that the reaction is carried out in the presence of CaO.